# EUROPÄISCHE PATENTSCHRIFT

(11) **EP 2 205 437 B1**
(45) Veröffentlichungstag und Bekanntmachung des Hinweises auf die Patenterteilung: **13.04.2011**
(21) Anmeldenummer: 08845476.4
(22) Anmeldetag: 29.10.2008
(51) Int. Cl.: B32B 27/36, B42D 15/00, B42D 15/10

(54) **VERFAHREN ZUR HERSTELLUNG EINES POLYCARBONAT-SCHICHTVERBUNDES**
METHOD FOR PRODUCING A POLYCARBONATE LAYERED COMPOSITE
PROCÉDÉ DE FABRICATION D'UN COMPOSITE STRATIFIÉ DE POLYCARBONATE

(30) Priorität: 31.10.2007 DE 102007052948
(43) Veröffentlichungstag der Anmeldung: 14.07.2010
(73) Patentinhaber: Bundesdruckerei GmbH, 10958 Berlin (DE); Bayer Material Science AG, 51368 Leverkusen (DE)
(72) Erfinder: MUTH, Oliver, 12277 Berlin (DE); LEOPOLD, André, 10119 Berlin (DE); PFLUGHOEFFT, Malte, 13347 Berlin (DE); FISCHER, Jörg, 13053 Berlin (DE); PAESCHKE, Manfred, 16352 Basdorf (DE); PUDLEINER, Heinz, 47800 Krefeld (DE); YESILDAG, Cengiz, 51377 Leverkusen (DE); MEYER, Klaus, 41539 Dormagen (DE)
(74) Vertreter: Jungblut, Bernhard Jakob
(86) Internationale Anmeldenummer: PCT/DE2008/001752
(87) Internationale Veröffentlichungsnummer: WO 2009/056111

(56) Entgegenhaltungen:
- DE-A1- 4 421 561
- DE-A1- 10 013 410

## Beschreibung

### Gebiet der Erfindung

Die Erfindung betrifft ein Verfahren zur Herstellung eines Verbundes mit zumindest einer ersten Polymerschicht sowie einer zweiten Polymerschicht jeweils aus einem Polycarbonat-Polymer auf Basis Bisphenol A, wobei zwischen den Polymerschichten ein Bauteil angeordnet ist, mit den folgenden Verfahrensstufen: das Bauteil wird auf der ersten Polymerschicht angeordnet oder in eine Vertiefung der ersten Polymerschicht eingelegt, anschließend wird die zweite Polymerschicht auf die erste Polymerschicht, das Bauteil abdeckend, aufgelegt, und die erste Polymerschicht und die zweite Polymerschicht werden unter Druck, bei einer erhöhten Temperatur und für eine definierte Zeitspanne miteinander laminiert. Die Erfindung betrifft des Weiteren eines in dieser Weise erhältlichen Verbund, die Verwendung des Verfahrens zur Herstellung eines Sicherheits- und/oder Wertdokuments, sowie ein solchermaßen herstellbares Sicherheits- und/oder Wertdokument.

### Hintergrund der Erfindung und Stand der Technik

Bei der Einbringung elektronischer Bauteile, insbesondere integrierter Halbleiter (ICs), aber auch von Chipmodulen, Displays, Batterien, Spulen, Kondensatoren, Kontaktstellen, u.a., in Polycarbonat-(PC-) basierte Dokumente ergibt sich beispielsweise bei gedünnten Halbleiterstrukturen das Problem der vorzeitigen Zerstörung oder Beeinträchtigung der Lebensdauer des Bauteils während der Lamination durch thermische und mechanische Überlastung bzw. Belastung. Bei bekannten Verfahren der eingangs genannten Art, beispielsweise zur Fertigung von PC-Smart-Cards im Wege des Laminierens einzelner Folien-Lagen erfolgt eine Positionierung einer PC-Folie direkt über dem Chip. Bei der industriell etablierten Vorgehensweise werden die vorbereiteten Kartenaufbauten und gleichzeitiger Einwirkung von Temperatur und Druck zu einem "quasi-monolithischen" Block zusammengepresst. Da PC aufgrund seines spezifischen Wärmeübergangskoeffizienten sowie seiner relativ hohen Glastemperatur T_{g} nicht sofort erweicht, herrscht direkt am Chip einer erhöhter mechanischer Druck, der in den meisten Fällen zur mechanischen Zerstörung des Chips führt.

Zur Vermeidung dieses Problems ist es bekannt, auf die elektronischen Bauteile selbstklebende bzw. elastische Folien aufzubringen, wodurch die PC-Folien mit zwischengelegten Bauteilen, wie Chips, ohne hohes Zerstörungsrisiko für das Bauteil zu einer Karte zusammengefügt werden können. In der Regel sind diese Adhäsivlagen allerdings ein Schwachpunkt des Kartenaufbaus. Denn über die Kartenkante können leichter Wasserdampf und Luft hinein diffundieren und somit zu einer nachträglichen Delamination führen. Auch andere Umwelteinflüsse, insbesondere hohe Temperaturen, aber auch schnelle Temperaturwechsel können dazu führen, dass die Karte aufgespaltet und damit nicht mehr brauchbar wird. Darüber hinaus sind Selbstklebefolien mit einer Dicke < 50 µm im industriellen Maßstab schwer bis gar nicht mehr handhabbar und unflexibel, wenn es z.B. darum geht, Kavitäten auszufüllen. Ähnliches gilt für Bauteile mit diffraktiven Strukturen, z.B. Volumen-Hologramme. Wird das Hologramm direkt mit weiteren PC Folien zu einer Karte laminiert, erfolgt dies in bestimmten Fällen unter visuell und maschinell quantifizierbaren Einbußen der Darstellungsqualität des Hologramms, insbesondere der Farben und des 3-dimensionalen Erscheinungsbildes. Die meisten Volumenhologramme auf Photopolymerbasis besitzen nämlich einen Erweichungspunkt bzw. eine Glastemperatur T_{g} von deutlich unter 150 °C. Werden während des Laminierens die zu Beginn noch harten PC-Folien auf das weiche Photopolymer des Hologramms gepresst, so versetzen sich die Bragg-Ebenen und bestimmte Elemente erscheinen wellenlängenverschoben. Zum Beispiel werden aus grünen Bildelementen gelbe Bildelemente, etc.. Gerade bei Volumenhologrammen wird zudem der 3-dimensionale Eindruck deutlich gemindert und die Hologramme erscheinen eher flach und zweidimensional sowie verwaschen. Auch diese Effekte beruhen auf dem Problem, dass das "harte" PC entweder auf spröde Flächen trifft und mechanischen Stress hervorruft oder weichere Körper, beispielsweise aus einem Photopolymer, verformt, wodurch diese Bauteile in Ihrer Funktion beeinträchtigt sind.

Aus der Literaturstelle EP 0688839 A2 sind Polycarbonate auf Basis eines geminal disubstituierten Dihydroxydiphenylcycloalkans per se bekannt. In diesem Stand der Technik werden solche Polycarbonate als Bindemittel von Siebdruckfarben eingesetzt. Dieser Literaturstelle sind auch Verfahren zur Herstellung solcher Polycarbonate entnehmbar. Diese Literaturstelle wird hiermit vollumfänglich in den Offenbarungsgehalt der vorliegenden Anmeldung aufgenommen.

### Technisches Problem der Erfindung

Der Erfindung liegt daher das technische Problem zu Grunde, ein Verfahren zum Einlaminieren eines temperatur- und/oder druckempfindlichen Bauteils zwischen zwei Polymerschichten aus einem Polycarbonat anzugeben, bei welchem eine Beschädigung oder Beeinträchtigung des Bauteils reduziert bzw. vermieden wird, wobei aber dennoch eine sehr hohe Integrität und Haltbarkeit des erzeugten Verbundes gewährleistet ist.

### Grundzüge der Erfindung und bevorzugte Ausführungsformen

Zur Lösung dieses technischen Problems lehrt die Erfindung ein Verfahren zur Herstellung eines Verbundes mit zumindest einer ersten Polymerschicht sowie einer zweiten Polymerschicht jeweils aus einem Polycarbonatpolymer auf Basis Bisphenol A, wobei zwischen den Polymerschichten ein Bauteil angeordnet ist, mit den folgenden Verfahrensstufen: a) das Bauteil wird auf der ersten Polymerschicht angeordnet oder in eine Vertiefung der ersten Polymerschicht eingelegt, b) die erste Polymerschicht wird auf der Seite, auf oder in welcher das Bauteil angeordnet ist, zumindest im Bereich des Bauteils mit einer flüssigen Zubereitung enthaltend ein Lösungsmittel oder ein Lösungsmittelgemisch sowie ein Polycarbonatderivat auf Basis eines geminal disubstituierten Dihydroxydiphenyl-cycloalkans, beschichtet, c) optional erfolgt anschließend an Stufe b) eine Trocknungsverfahrensstufe, d) anschließend an Stufe b) oder Stufe c) wird die zweite Polymerschicht auf die erste Polymerschicht, das Bauteil abdeckend, aufgelegt, e) die erste Polymerschicht und die zweite Polymerschicht werden unter Druck, bei einer Temperatur von 120 °C bis 200 °C oder 220 °C und für eine definierte Zeitspanne miteinander laminiert.

Die Erfindung beruht auf der Erkenntnis, dass erfindungsgemäß eingesetzte Polycarbonatderivate bereits bei Temperaturen unterhalb des üblichen Erweichungspunktes von Polycarbonatwerkstoffen für Folien und andere Schichten (Polycarbonate auf Basis Bisphenol A, T_{g} ca. 150 °C) fließfähig werden und zugleich hochkompatibel mit Polycarbonatwerkstoffen für Folien, wie beispielsweise in Makrofol®-Folien, sind. Die Fließfähigkeit bereits bei niedrigeren Temperaturen als die normalen Laminiertemperaturen führt dazu, dass die Bauteile im Anfangsbereich des Laminierens, wobei bereits ein Druck aufgebracht wird, der zu laminierende Schichtenverbund aber noch nicht auf die Laminiertemperatur durchgewärmt ist, weniger mechanisch belastet werden. Die hohe Kompatibilität zeigt sich darin, dass die erfindungsgemäß eingebrachte Schicht mit einem Polycarbonatderivat sich mit den Polycarbonatwerkstoffen der Folien zu einem monolithischen Verbund fügt. Eine Schichtgrenze zwischen den Materialien ist nach dem Laminieren optisch nicht mehr zu detektieren. Die für die Bauteile schonende Laminierung in Verbindung mit der hohen Kompatibilität kann, ohne an eine Theorie gebunden sein zu wollen, auch damit zusammenhängen, dass überraschenderweise bei dem Polycarbonatderivat nach einer ersten Erwärmung eine Phasenänderung stattfinden kann, in deren Zuge die Glastemperatur Tg auf Werte ansteigt, die jenen von Polycarbonat auf Basis Bisphenol A nahekommt.

Die erfindungsgemäß eingesetzten Polycarbonatderivate erlauben im Ergebnis das Fügen bzw.. Laminieren unter Einbindung von druck- und temperaturempfindlichen Bauteilen, wobei das Polycarbonatderivat sich ansonsten nach Temperatureinwirkung (z.B. beim Laminieren) wie ein "reines" Polycarbonat auf Basis Bisphenol A verhält.

Ein weiterer Vorteil der Erfindung ist, dass die erfindungsgemäß eingesetzten flüssigen Zubereitungen, insbesondere Lösungen, drucktechnisch aufbringbar sind und daher im Rahmen der einschlägig bekannten Druckverfahren (z.B. Durch-, Tief-, Hoch- und Flachdruck aber auch Tintenstrahldruck) mit den entsprechenden (niedrigen) lateralen Schichtstärken appliziert werden kann. Dies führt im Vergleich zu flächig anzuwendenden Klebefolien zu erheblicher Materialersparnis. Handelsübliche Klebesysteme (z.B. auf Basis von Epoxiden) könnten demgegenüber theoretisch zwar auch gedruckt werden, würden sich aber beim Laminieren verfärben oder ihre adhäsiven Eigenschaften verlieren.

Das Druckverfahren ermöglicht auch eine ortsaufgelöste, nicht vollflächige Einbringung, sowie ortsaufgelöst verschiedene Schichtdicken.

Über das Drucken hinaus können die flüssigen Zubereitungen auch gerakelt, dispensiert, gespritzt, gegossen oder auch gestrichen oder gesprüht werden.

Grundsätzlich können im Rahmen der Erfindung beliebige Bauteile eingesetzt werden. Die erfindungsgemäßen Vorteile kommen jedoch insbesondere bei Bauteilen zum Tragen, welche mechanisch und/oder thermisch empfindlich sind, wie beispielsweise elektronische Bauteile oder (Volumen-) Hologramme. Zu den elektronischen Bauteilen zählen beispielsweise integrierte Schaltungen, Dickschicht Schaltungen, Schaltungen umfassend mehrere diskrete aktive und passive elektronische Bauteile, Sensoren, Chipmodule, Displays, Batterien, Spulen, Kondensatoren, Kontaktstellen und vieles mehr.

Der spezifische Druck (Druck am Werkstück) in Stufe e) liegt typischerweise im Bereich von 1 Bar bis 10 Bar, insbesondere im Bereich von 3 Bar bis 7 Bar. Die Temperatur in Stufe e) liegt vorzugsweise im Bereich 140 °C bis 180°C, insbesondere im Bereich von 150 °C bis 170 °C. Die Dauer der Stufe e) kann im Bereich von 0,5 s bis 45 min., insbesondere 10 bis 30 min., liegen.

In Stufe c) kann bei einer Temperatur im Bereich 20 °C bis 120 °C, insbesondere 60 °C bis 120 °C, vorzugsweise 80 °C bis 110 °C, für eine Dauer von zumindest 1 min., vorzugsweise 5 min. bis 600 min., insbesondere 10 min. bis 120 min., getrocknet werden.

Die in Stufe b) erzeugte Schichtdicke (vor oder nach dem Trocknen) liegt beispielsweise im Bereich von 0,1 µm bis 50 µm, vorzugsweise von 1 µm bis 10 µm, insbesondere von 2 µm bis 5 µm.

Die eingesetzten Polymerschichten können eine Dicke im Bereich von 20 µm bis 1000 µm, insbesondere 50 µm bis 300 µm, aufweisen. Sofern in Stufe a) eine Vertiefung vorgesehen ist, kann deren Tiefe 10 % bis 100 % der Dicke der Polymerschicht betragen. Typische absolute Werte der Vertiefung werden meist im Bereich von 5 µm bis 50 µm liegen.

Bevorzugt ist es, wenn das Polycarbonatderivat ein mittleres Molekulargewicht (Gewichtsmittel) von mindestens 10.000, vorzugsweise von 20.000 bis 300.000, aufweist.

Im Einzelnen kann das Polycarbonatderivat funktionelle Carbonatstruktureinheiten der Formel (I) enthalten, 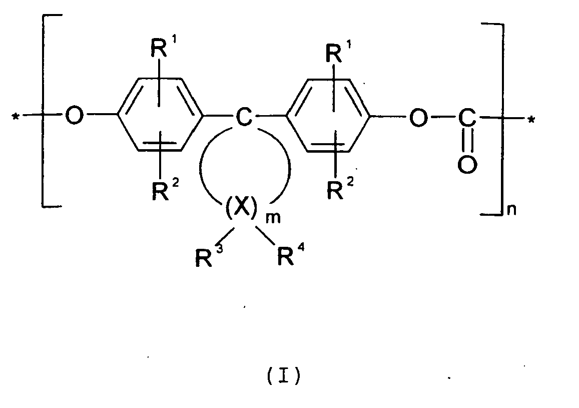 worin R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl; m eine ganze Zahl von 4 bis 7, bevorzugt 4 oder 5; R³ und R⁴ für jedes X individuell wählbar, unabhängig voneinander Wasserstoff oder C₁-C₆-Alkyl; X Kohlenstoff und n eine ganze Zahl größer 20 bedeuten, mit der Maßgabe, dass an mindestens einem Atom X, R³ und R⁴ gleichzeitig Alkyl bedeuten.

Weiterhin bevorzugt ist es, wenn an 1 bis 2 Atomen X, insbesondere nur an einem Atom X, R³ und R⁴ gleichzeitig Alkyl sind. R³ und R⁴ können insbesondere Methyl sein. Die X-Atome in alpha-Stellung zu dem Diphenyl-substituierten C-Atom (C1) können nicht dialkylsubstituiert sein. Die X-Atome in beta-Stellung zu C1 können mit Alkyl disubstituiert sein. Bevorzugt ist m = 4 oder 5. Das Polycarbonatderivat kann beispielsweise auf Basis von Monmeren, wie 4,4'-(3,3,5-trimethylcyclohexan-1,1-diyl)diphenol, 4,4'-(3,3-dimethylcyclohexan-1,1-diyl)diphenol, oder 4,4'-(2,4,4-trimethylcyclopentan-1,1-diyl)diphenol gebildet sein.

Ein erfindungsgemäßes Polycarbonatderivat kann beispielsweise gemäß der Literaturstelle DE 38 32 396.6 aus Diphenolen der Formel (Ia) hergestellt werden, deren Offenbarungsgehalt hiermit vollumfänglich in den Offenbarungsgehalt dieser Beschreibung aufgenommen wird.

Es können sowohl ein Diphenol der Formel (Ia) unter Bildung von Homopolycarbonaten als auch mehrere Diphenole der Formel (Ia) unter Bildung von Copolycarbonaten verwendet werden (Bedeutung von Resten, Gruppen und Parametern, wie in Formel I).

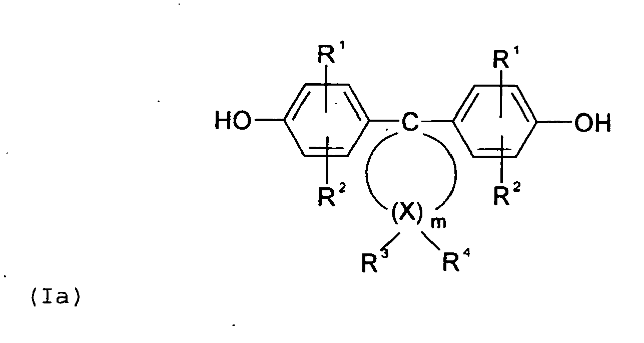

Außerdem können die Diphenole der Formel (Ia) auch im Gemisch mit anderen Diphenolen, beispielsweise mit denen der Formel (Ib)

HO - Z - OH (Ib),

zur Herstellung von hochmolekularen, thermoplastischen, aromatischen Polycarbonatderivaten verwendet werden.

Geeignete andere Diphenole der Formel (Ib) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (Ia) oder Heteroatome als Brückenglieder enthalten kann.

Beispiele der Diphenole der Formel (Ib) sind: Hydrochinon, Resorcin, Dihydroxydiphenyle, Bi-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha , alpha '-Bis-(hydroxyphenyl)-diisopropylbenzole sowie deren kernalkylierte und kernhalogenierte Verbindungen.

Diese und weitere geeignete Diphenole sind z.B. in den Literaturstellen US-A 3 028 365, 2 999 835, 3 148 172, 3 275 601, 2 991 273, 3 271 367, 3 062 781, 2 970 131 und 2 999 846, in den Literaturstellen DE-A 1 570 703, 2 063 050, 2 063 052, 2 211 956, der Fr-A 1 561 518 und in der Monographie "H. Schnell, Chemistry and Physics of Polycarbonates, Interscience Publishers, New York 1964", beschrieben, welche hiermit vollumfänglich in den Offenbarungsgehalt der vorliegenden Anmeldung aufgenommen werden.

Bevorzugte andere Diphenole sind beispielsweise: 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, alpha , alpha -Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, alpha , alpha -Bis-(3,5-dimethyl-4-hydroxyphenyl)-p-diisopropylbenzol, 2,2-Bis-(3,5-dichlor-4-hydroxyphenyl)-propan und 2,2-Bis-(3,5-dibrom-4-hydroxyphenyl)-propan.

Besonders bevorzugte Diphenole der Formel (Ib) sind beispielsweise: 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan. Insbesondere ist 2,2-Bis-(4-hydroxyphenyl)-propan bevorzugt. Die anderen Diphenole können sowohl einzeln als auch im Gemisch eingesetzt werden.

Das molare Verhältnis von Diphenolen der Formel (Ia) zu den gegebenenfalls mitzuverwendenden anderen Diphenolen der Formel (Ib), soll zwischen 100 Mol-% (Ia) zu 0 Mol-% (Ib) und 2 Mol-% (Ia) zu 98 Mol-% (Ib), vorzugsweise zwischen 100 Mol-% (Ia) zu 0 Mol-% (Ib) und 10 Mol-% (Ia) zu 90 Mol-% (Ib) und insbesondere zwischen 100 Mol-% (Ia) zu 0 Mol-% (Ib) und 30 Mol-% (Ia) zu 70 Mol-% (Ib) liegen.

Die hochmolekularen Polycarbonate aus den Diphenolen der Formel (Ia), gegebenenfalls in Kombination mit anderen Diphenolen, können nach den bekannten Polycarbonat-Herstellungsverfahren hergestellt werden. Dabei können die verschiedenen Diphenole sowohl statistisch als auch blockweise miteinander verknüpft sein.

Die erfindungsgemäß eingesetzten Polycarbonatderivate können in an sich bekannter Weise verzweigt sein. Wenn die Verzweigung gewünscht wird, kann sich in bekannter Weise durch Einkondensieren geringer Mengen, vorzugsweise Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen, erreicht werden. Einige Verzweiger mit drei oder mehr als drei phenolischen Hydroxylgruppen sind: Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-is-(2-hydroxy-5-methyl-benzyl)-4-methylphenol, 2-(4-hydroxyphenyl)-2-(2,4-dihydroxyphenyl)-propan, Hexa-[4-(4-hydroxyphenyl-isopropyl)-phenyl]-orthoterephthalsäureester, Tetra-(4-hydroxyphenyl)-methan, Tetra-[4-(4-hydroxyphenyl-isopropyl)phenoxy]-methan und 1,4-Bis-[4',4"-dihydroxytriphenyl)-methyl]-benzol. Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonatderivate dienen monofunktionelle Verbindungen in üblichen Konzentrationen. Geeignete Verbindungen sind z.B. Phenol, tert.-Butylphenole oder andere Alkyl-substituierte Phenole. Zur Regelung des Molekulargewichts sind insbesondere kleine Mengen Phenole der Formel (Ic) geeignet 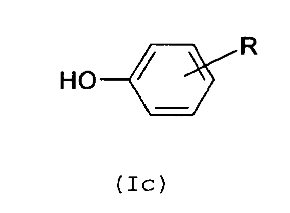 worin
R einen verzweigten C₈- und/oder C₉-Alkylrest darstellt.

Bevorzugt ist im Alkylrest R der Anteil an CH₃-Protonen zwischen 47 und 89 % und der Anteil der CH- und CH₂-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt.

Die Polycarbonatderivate können vorzugsweise nach dem Phasengrenzflächenverhalten (vgl. H. Schnell "Chemistry and Physics of Polycarbonates", Polymer Reviews, Vol. IX, Seite 33ff., Interscience Publ. 1964) in an sich bekannter Weise hergestellt werden.

Hierbei werden die Diphenole der Formel (Ia) in wässrig alkalischer Phase gelöst. Zur Herstellung von Copolycarbonaten mit anderen Diphenolen werden Gemische von Diphenolen der Formel (Ia) und den anderen Diphenolen, beispielsweise denen der Formel (Ib), eingesetzt. Zur Regulierung des Molekulargewichts können Kettenabbrecher z.B. der Formel (Ic) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0°C und 40°C.

Die gegebenenfalls mitverwendeten Verzweiger (bevorzugt 0,05 bis 2,0 Mol-%) können entweder mit den Diphenolen in der wässrig alkalischen Phase vorgelegt werden oder in dem organischen Lösungsmittel gelöst vor Phosgenierung zugegeben werden. Neben den Diphenolen der Formel (Ia) und gegebenenfalls anderen Diphenolen (Ib) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (Ia) und gegebenenfalls Formel (Ib); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol, sowie insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wässrige alkalische Phase dient beispielsweise NaOH-Lösung. Die Herstellung der Polycarbonatderivate nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen, eingesetzt werden. Die Katalysatoren können vor Beginn der Phosgenierung oder während oder auch nach der Phosgenierung zugesetzt werden.

Die Polycarbonatderivate können nach dem bekannten Verfahren in homogener Phase, dem sogenannten "Pyridinverfahren" sowie nach dem bekannten Schmelzeumesterungsverfahren unter Verwendung von beispielsweise Diphenylcarbonat anstelle von Phosgen hergestellt werden.

Die Polycarbonatderivate können linear oder verzweigt sein, sie sind Homopolycarbonate oder Copolycarbonate auf Basis der Diphenole der Formel (Ia).

Durch die beliebige Komposition mit anderen Diphenolen, insbesondere mit denen der Formel (Ib) lassen sich die Polycarbonateigenschaften in günstiger Weise variieren. In solchen Copolycarbonaten sind die Diphenole der Formel (Ia) in Mengen von 100 Mol-% bis 2 Mol-%, vorzugsweise in Mengen von 100 Mol-% bis 10 Mol-% und insbesondere in Mengen von 100 Mol-% bis 30 Mol-%, bezogen auf die Gesamtmenge von 100 Mol-% an Diphenoleinheiten, in Polycarbonatderivaten enthalten.

Eine besonders vorteilhafte Ausführungsform der Erfindung ist dadurch gekennzeichnet, dass das Polycarbonatderivat ein Copolymer enthaltend, insbesondere bestehend aus, Monomereinheiten M1 auf Basis der Formel (Ib), vorzugsweise Bisphenol A, sowie Monomereinheiten M2 auf Basis des geminal disubstituierten Dihydroxydiphenylcycloalkans, vorzugsweise des 4,4'-(3,3,5-trimethylcyclohexan-1,1-diyl)diphenols, ist, wobei das Molverhältnis M2/M1 vorzugsweise größer als 0,5 ist. Denn bei solchen Copolymeren wurde überraschenderweise festgestellt, dass die Glastemperatur nach einem ersten Aufheizzyklus von T_{g} unter 150 °C liegt und bei einem zweiten Aufheizzyklus erhöht sein kann, was die Stabilität des erhaltenen Verbundes deutlich erhöht.

Ganz besonders bevorzugt ist eine flüssige Zubereitung enthaltend: A) 1 bis 30 Gew.-%, vorzugsweise 10 bis 25 Gew.-%, insbesondere 15 bis 20 Gew.-%, eines erfindungsgemäß eingesetzten Polycarbonatderivates, und B) 70 bis 99 Gew.-%, vorzugsweise 75 bis 90 Gew.-%, insbesondere 80 bis 85 Gew.-%, eines organischen Lösungsmittels oder Lösungsmittelgemisches.

Die flüssige Zubereitung kann sogenannte funktionale Materialien enthalten. Hier sind die dem Fachmann einschlägig bekannten Materialien [van Renesse, Optical document security, 3rd ed., Artech House, 2005] gemeint, die zu Absicherung von Wert und Sicherheitsdokumenten eingesetzt werden. Dazu zählen Lumineszenzstoffe (Farbstoff wie Pigment, organisch wie anorganisch) wie z.B. Photoluminophore, Elektroluminophore, Antistokes Luminophore, Fluorophore aber auch magnetisierbare, photoakkustisch adressierbare oder piezoelektrische Materialien. Das beinhaltet Fluoreszenzstoffe wie auch Phosphoreszenzstoffe. Des Weiteren können Raman-aktive oder -verstärkende Materialien eingesetzt werden, ebenso wie sogenannte Barcode-Materialien.

Die eingesetzten organischen Lösungsmittel sind vorzugsweise halogenfreie Lösungsmittel. In Frage kommen insbesondere aliphatische, cycloaliphatische, aromatische Kohlenwasserstoffe, wie Mesitylen, 1,2,4- Trimethylbenzol, Cumol und Solvent Naptha, Toluol, Xylol; (organische) Ester, wie Methylacetat, Ethylacetat, Butylacetat, Methoxypropylacetat, Ethyl-3-ethoxypropionat. Bevorzugt sind Mesitylen, 1,2, 4, Trimethylbenzol, Cumol und Solvent Naptha, Toluol, Xylol, Essigsäuremethylester, Essigsäureethylester, Methoxypropylacetat. Ethyl-3-ethoxypropionat. Ganz besonders bevorzugt sind: Mesitylen (1,3,5-Trimethylbenzol), 1,2,4-Trimethylbenzol, Cumol (2-Phenylpropan), Solvent Naptha und Ethyl-3-ethoxypropionat.

Ein geeignetes Lösungsmittelgemisch umfasst beispielsweise A) 0 bis 10 Gew.-%, vorzugsweise 1 bis 5 Gew.-%, insbesondere 2 bis 3 Gew.-%, Mesitylen, B) 10 bis 50 Gew.-%, vorzugsweise 25 bis 50 Gew.-%, insbesondere 30 bis 40 Gew.-%, 1-Methoxy-2-propanolacetat, C) 0 bis 20 Gew.-%, vorzugsweise 1 bis 20 Gew.-%, insbesondere 7 bis 15 Gew.-%, 1,2,4-Trimethylbenzol, D) 10 bis 50 Gew.-%, vorzugsweise 25 bis 50 Gew.-%, insbesondere 30 bis 40 Gew.-%, Ethyl-3-ethoxypropionat, E) 0 bis 10 Gew.-%, vorzugsweise 0,01 bis 2 Gew.-%, insbesondere 0,05 bis 0,5 Gew.-%, Cumol, und 0 bis 80 Gew.-%, vorzugsweise 1 bis 40 Gew.-%, insbesondere 15 bis 25 Gew.-%, Solvent Naphtha, wobei die Summe der Komponenten A) bis E) stets 100 Gew.-% ergibt.

Aus Gründen der niedrigen Temperaturbelastung des Bauteils ist es bevorzugt, wenn die Temperatur in Stufe e) im Bereich von 120 °C bis 220 °C, insbesondere 120 °C bis 200 °C, ist. Dabei kann die Temperatur anfänglich der Stufe e) bei 120 °C bis 150°C und zum Ende der Stufe e) 150 °C bis 200 °C bzw. 220 °C betragen.

Typischerweise weisen die erste Polycarbonatschicht und die zweite Polycarbonatschicht eine Glastemperatur T_{g} von mehr als 145 °C, insbesondere mehr als 147 °C, auf.

Die Dicke der ersten Polycarbonatschicht und der zweiten Polycarbonatschicht kann, gleich oder verschieden, im Bereich von 10 bis 1000 µm, insbesondere von 20 bis 200 µm, liegen. Die Dicke, gemessen in Richtungen orthogonal zu einer Hauptfläche einer Polycarbonatschicht, des Bauteils liegt beispielsweise im Bereich 0,1 bis 50 µm, insbesondere 1 bis 30 µm.

Die Erfindung betrifft des Weiteren einen Verbund, der mit einem erfindungsgemäßen Verfahren erhältlich ist. Als strukturelle Merkmale kann ein solcher Verbund eine erste Polycarbonatschicht, eine zweite Polycarbonatschicht, ein zwischen der ersten Polycarbonatschicht und der zweiten Polycarbonatschicht angeordnetes Bauteil und eine die erste Polycarbonatschicht mit der zweiten Polycarbonatschicht verbindenden Zwischenschicht enthaltend ein Polycarbonatderivat auf Basis eines geminal disubstituierten Dihydroxydiphenylcycloalkans aufweisen, wobei die Polycarbonatschichten und die Zwischenschicht jeweils stoffschlüssig miteinander verbunden sind.

Die Erfindung betrifft des Weiteren die Verwendung eines erfindungsgemäßen Verfahrens zur Herstellung eines Sicherheits- und/oder Wertdokuments, wobei gleichzeitig mit, oder vor oder nach der Herstellung des Verbundes die erste Polycarbonatschicht und/oder die zweite Polycarbonatschicht mit zumindest einer weiteren Schicht, beispielsweise einer Druckschicht, direkt oder indirekt verbunden wird. Als Sicherheits- und/oder Wertdokument seien beispielhaft genannt: Personalausweise, Reisepässe, ID-Karten, Zugangskontrollausweise, Visa, Steuerzeichen, Tickets, Führerscheine, Kraftfahrzeugpapiere, Banknoten, Schecks, Postwertzeichen, Kreditkarten, beliebige Chipkarten und Haftetiketten (z.B. zur Produktsicherung). Solche Sicherheits- und/oder Wertdokumente weisen typischerweise zumindest ein Substrat, eine Druckschicht und optional eine transparente Deckschicht auf. Substrat, Druckschicht und Deckschicht können ihrerseits aus einer Mehrzahl von Schichten bestehen. Ein Substrat ist eine Trägerstruktur, auf welche die Druckschicht mit Informationen, Bildern, Mustern und dergleichen aufgebracht wird. Als Materialien für ein Substrat kommen alle fachüblichen Werkstoffe auf Papier- und/oder (organischer) Polymerbasis in Frage. Ein solches Sicherheits- und/oder Wertdokument umfasst innerhalb des Gesamt-Schichtverbundes einen erfindungsgemäßen Verbund. Neben dem erfindungsgemäßen Verbund ist zumindest noch eine Druckschicht eingerichtet, ggf. sind auch mehrere Druckschichten eingerichtet, welche zwischen den beiden Polymerschichten, auf einer äußeren Fläche des Verbundes oder auf einer mit dem Verbund verbundenen weiteren Schicht angebracht sein kann bzw. sein können.

Im Folgenden wird die Erfindung anhand von nicht limitierenden Ausführungsbeispielen näher erläutert.

Es zeigen:
- Figur 1:: Differential Scanning Calorimetry Diagramm an einer Schicht mit erfindungsgemäß eingesetztem Polycarbonatderivat,
- Figur 2:: Prozessablauf der Herstellung eines Schichtverbundes mit Halbleiterbauteil,
- Figur 3:: Prozessablauf der Herstellung eines Schichtverbundes mit Volumenhologramm, und
- Figur 4:: Prozessablauf der Herstellung eines Schichtverbundes mit Display.
- Beispiel 1:: Herstellung von erfindungsgemäß einsetzbaren Polycarbonatderivaten
- Beispiel 1.1:: Herstellung eines ersten Polycarbonatderivats

205,7 g (0,90 Mol) Bisphenol A (2,2-Bis-(4-hydroxyphenyl)-propan, 30,7 g (0,10 Mol) 1,1-Bis-(4-hydroxyphenyl)-3,3,5-trimethylcyclohexan, 336,6 g (6 Mol KOH und 2700 g Wasser werden in einer Inertgas-Atmosphäre unter Rühren gelöst. Dann fügt man eine Lösung von 1,88 g Phenol in 2500 ml Methylenchlorid zu. In die gut gerührte Lösung wurden bei pH 13 bis 14 und 21 bis 25°C 198 g (2 Mol) Phosgen eingeleitet. Danach wird 1 ml Ethylpiperidin zugegeben und noch 45 Min. gerührt. Die bisphenolatfreie wässrige Phase wird abgetrennt, die organische Phase nach Ansäuern mit Phosphorsäure mit Wasser neutral gewaschen und vom Lösungsmittel befreit.

Das Polycarbonatderivat zeigte eine relative Lösungsviskosität von 1,255.

### Beispiel 1.2: Herstellung eines zweiten Polycarbonatderivats

Analog dem Beispiel 1.1 wurde eine Mischung aus 181,4 g (0,79 Mol) Bisphenol A und 63, 7 g (0,21 Mol) 1,1-Bis-(4-hydroxyphenyl)-3,3,5-trimethylcyclohexan zum Polycarbonat umgesetzt.

Das Polycarbonatderivat zeigte eine relative Lösungsviskosität von 1,263.

### Beispiel 1.3: Herstellung eines dritten Polycarbonatderivats

Wie in Beispiel 1 wurde eine Mischung aus 149,0 g (0,65 Mol) Bisphenol A und 107,9 g (0,35 Mol) 1,1-Bis-(4-hydroxyphenyl)-3,3,5-trimethylcyclohexan zum Polycarbonat umgesetzt.

Das Polycarbonatderivat zeigte eine relative Lösungsviskosität von 1,263.

### Beispiel 1.4: Herstellung eines vierten Polycarbonatderivats

Wie in Beispiel 1 wurde eine Mischung aus 205,7 g (0,90 Mol) Bisphenol A und 30,7 g (0,10 Mol) 1,1-Bis-(4-hydroxyphenyl)-3,3,5-trimethylcyclohexan zum Polycarbonat umgesetzt.

### Beispiel 1.5: Herstellung eines fünften Polycarbonatderivats

Wie in Beispiel 1 wurde eine Mischung aus 181,4 g (0,79 Mol) Bisphenol A und 63,7 g (0,21 Mol) 1, 1-Bis- (4-hydroxyphenyl)-3,3,5-trimethylcyclohexan zum Polycarbonat umgesetzt.

### Beispiel 2: Herstellung einer erfindungsgemäß eingesetzten flüssigen Zubereitung

Als drucktechnisch, beispielsweise mittels Siebdruck, aufbringbare flüssige Zubereitung wird die folgende Lösung hergestellt: 17,5 Gew.-Teile des Polycarbonats aus Beispiel 1.3, 82,5 Gew.-Teile des folgenden Lösungsmittel-Gemisches, bestehend aus:

| | |
|---|---|
| Mesitylen | 2,4 |
| 1-Methoxy-2-propanolacetat | 34,95 |
| 1,2,4-Trimethylbenzol | 10,75 |
| Ethyl-3-ethoxypropionat | 33,35 |
| Cumol | 0,105 |
| Solvent Naphtha | 18,45 |

Es wurde eine farblose, hochviskose Lösung mit einer Lösungsviskosität bei 20°C von 800m Pas erhalten.

### Beispiel 3: Messung der Glastemperatur einer Beschichtung enthaltend ein Polycarbonatderivat aus Beispiel 3.

Es wurde eine Lösung des Polycarbonatderivates des Beispiels 1.3 in einem Lösungsmittelgemisch des Beispiels 2 hergestellt, wobei der Anteil des Polycarbonatderivates 10 Gew.-% und der Anteil des Lösungsmittelgemisches 90 Gew.-% betrug.

Die erhaltene Lösung wurden auf eine Glasplatte mittels Siebdruck gedruckt, so dass sich Trockenschichtdicken von 5 µm ergaben. Die Beschichtung wurde 1 Stunde bei 100°C im Trockenschrank getrocknet. Anschließend wurde der getrocknete Film von der Glasplatte abgelöst und mittels Differential Scanning Calometry (DSC) untersucht.

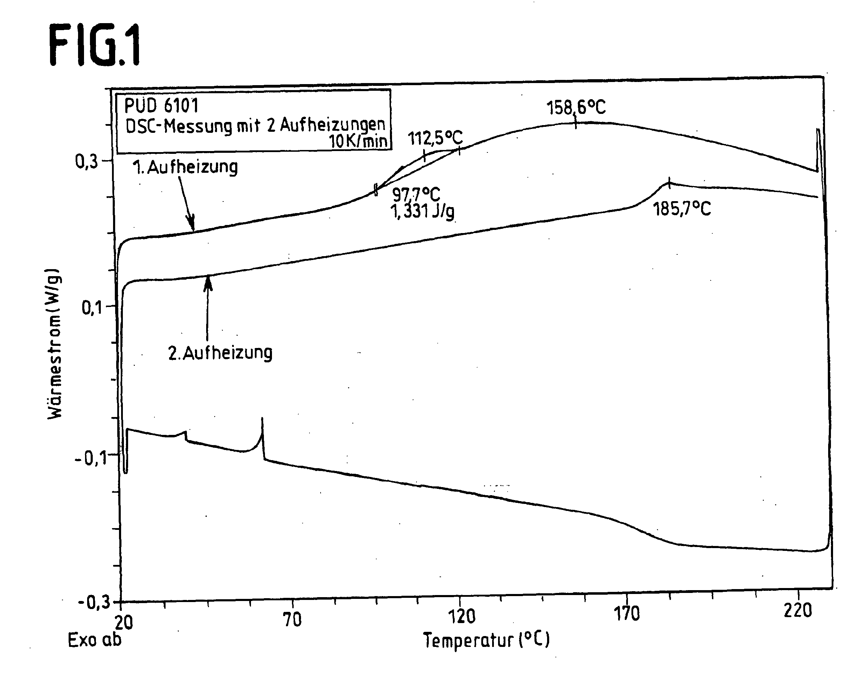

Nach Trocknung beim ersten Aufheizen wird eine Erweichungstemperatur von T_{g} = 112 °C festgestellt. Erst beim Abkühlen und zweiten Aufheizen werden die erwarteten Übergänge bei T_{g} = 185 °C beobachtet. Das DSC (Differential Scanning Calorimetry) Diagramm ist in der Figur 1 dargestellt. Der niedrige T_{g}-Wert beim ersten Aufheizen erlaubt eine vergleichsweise niedrige Temperatur beim Laminieren.

### Beispiel 4: Herstellung erfindungsgemäßer Verbunde

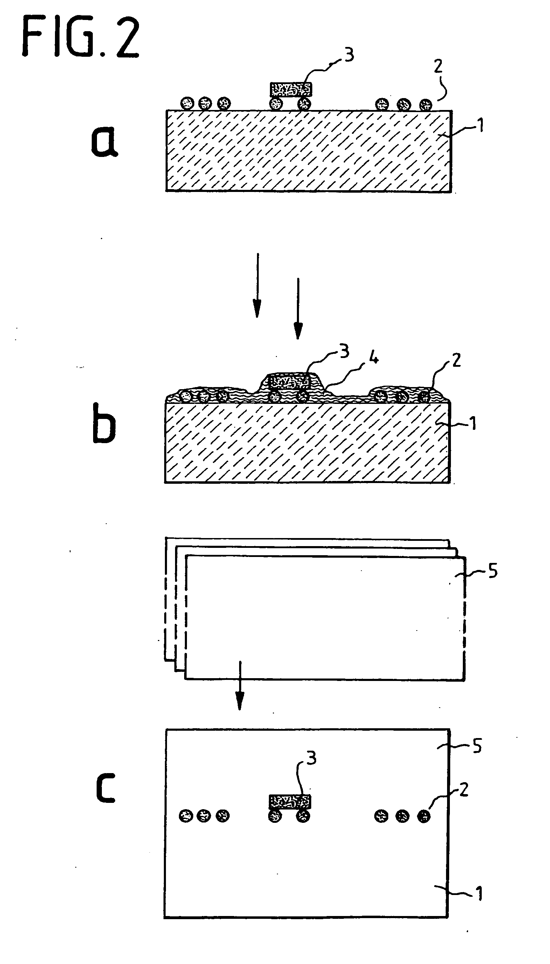

Eine Polycarbonatfolie 1 Makrofol® 6-2 (Dicke ca. 100 µm) wird mit Elementen einer Transponderantenne 2 aus Kupfer und einer Silberpaste belegt (Figur 2a). Die Elemente der Transponderantenne 2 haben eine Dicke von ca. 12 µm. Auf den vorgegebenen Kontaktbereich der Transponderantenne 2 wird ein Halbleiterbauteil 3, ein 15 µm dicker sogenannter Flexchip, welcher die elektronischen Transponderfunktionen steuert, aufgelegt (Figur 2a). Nunmehr wird die mit den genannten Bauteilen 2, 3 versehene Seite der Polycarbonatfolie 1 mittels Siebdruck mit einer Schicht 4 aus der Zusammensetzung gemäß Beispiel 2 versehen (Figur 2b). Der Siebdruck erfolgt zweimal. Dann erfolgt eine Trocknung unter Luftatmosphäre bei 100 °C für 60 min. Es resultiert eine Schichtdicke von ca. 3,3 µm des getrockneten Polycarbonatderivats (Figur 2b). Sodann wird die Seite der Polycarbonatfolie 1 mit den Bauteilen 2, 3 und der Polycarbonatderivatschicht 4 mit einer weiteren Polycarbonatfolie 5 Makrofol® 6-2 (Dicke ca. 100 µm) bedeckt und der so entstandene Verbund wird mit ggf. weiteren gestapelten Polymerschichten in einer üblichen industriellen Laminierpresse unter Einwirkung üblichen Drucks (ca. 5 Bar) und bei gut 160 °C und bis zu 200 °C und mehr laminiert (Figur 2c).

Vergleichsversuche wurden in entsprechender Weise durchgeführt, wobei jedoch die Schicht aus dem Polycarbonatderivat 4 weggelassen wurde.

Während die Ausbeute funktionsfähiger Bauteile bei dem erfindungsgemäßen Vorgehen bei ca. 75% lag, ergab das Verfahren ohne Einsatz des Polycarbonatderivats eine Ausbeute von lediglich ca. 25%.

Eine optische Untersuchung des Verbundes ergab keinerlei erkennbare Phasengrenze in jenen Bereichen, in denen die beiden Polycarbonatfolien 1, 5 direkt miteinander (bzw. nur über die Schicht 4 aus Polycarbonatderivat) verbunden worden waren. Der Verbund zeigte sich als monolithischer Block.

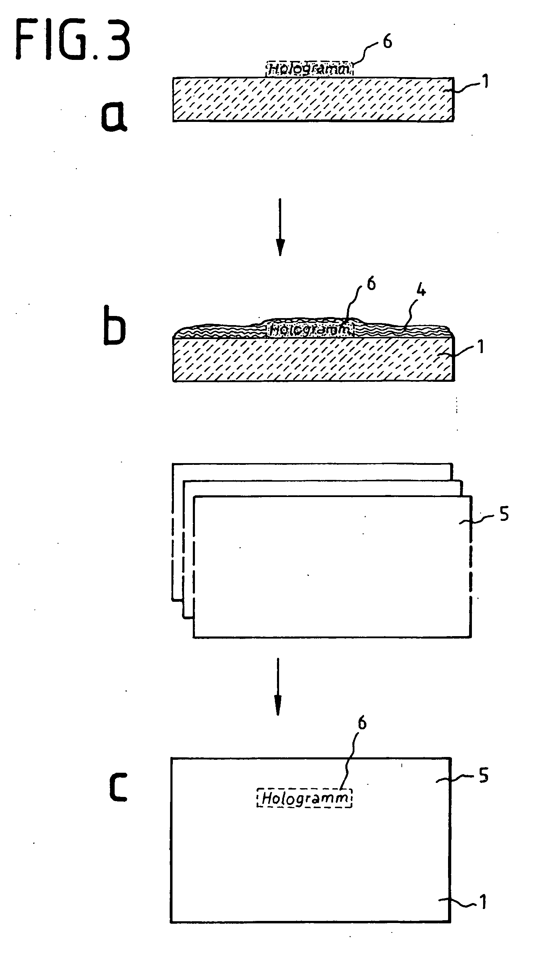

Ein weiteres Beispiel für ein einlaminierbares Bauteil ist ein Volumenhologramm 6, welches z.B. eine Dicke von 10 µm haben kann. Die Verarbeitung erfolgt ganz analog der vorstehenden Variante, wozu ergänzend auf die Prozessabläufe der Figuren 3a -3c verwiesen wird. Man erhält einen Verbund, dessen einlaminiertes Hologramm 6 allen Anforderungen der Abbildungsqualität, einschließlich der Farben, genügt.

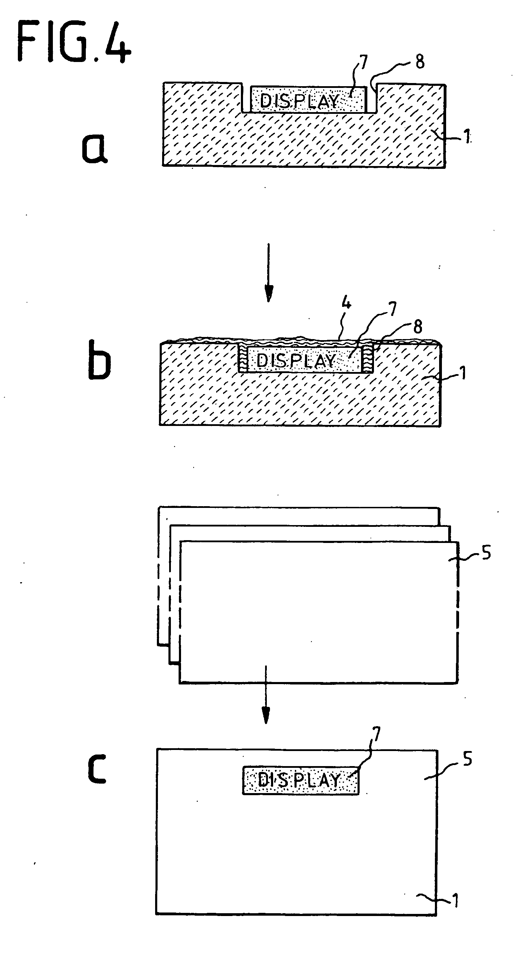

Ein anderes Beispiel für andere eihzulaminierende Bauteile können Displays 7 oder andere im allgemeinen Teil der Beschreibung genannte elektronische Bauteile sein. Sofern ein solches Bauteil 7 eine Schichtdicke von mehr als 30 µm aufweist, kann es sich empfehlen, dass das Bauteil nicht auf die Polycarbonat-folie 1 aufgelegt, sondern in eine Ausnehmung 8 der Polycarbonatfolie 1 eingelegt wird. Dann erfolgt die Beschichtung mit dem Polycarbonatderivat zweckmäßigerweise mit der Maßgabe, dass in der Ausnehmung 8 bei eingelegtem Bauteil 7 keine Hohlräume mehr verbleiben, sondern mit dem Polycarbonatderivat eine vollständige Verfüllung erreicht wird. Der zugehörige Prozessablauf ist in den Figuren 4a- 4c dargestellt.

## Patentansprüche

1. Verfahren zur Herstellung eines Verbundes mit zumindest einer ersten Polymerschicht (1) sowie einer zweiten Polymerschicht (5) jeweils aus einem Polycarbonat Polymer auf Basis Bisphenol A, wobei zwischen den Polymerschichten (1, 5) ein Bauteil (2, 3, 6, 7) angeordnet ist, mit den folgenden Verfahrensstufen:
a) das Bauteil wird auf der ersten Polymerschicht (1) angeordnet oder in eine Vertiefung (8) der ersten Polymerschicht (1) eingelegt,
b) die erste Polymerschicht (1) wird auf der Seite, auf oder in welcher das Bauteil (2, 3, 6, 7) angeordnet ist, zumindest im Bereich des Bauteils (2, 3, 6, 7) mit einer flüssigen Zubereitung enthaltend ein Lösungsmittel oder ein Lösungsmittelgemisch sowie ein Polycarbonatderivat auf Basis eines geminal disubstituierten Dihydroxydiphenylcycloalkans, beschichtet,
c) optional erfolgt anschließend an Stufe b) eine Trocknungsverfahrensstufe,
d) anschließend an Stufe b) oder Stufe c) wird die zweite Polymerschicht (5) auf die erste Polymerschicht (1), das Bauteil (2, 3, 6, 7) abdeckend, aufgelegt,
e) die erste Polymerschicht (1) und die zweite Polymerschicht (5) werden unter Druck, bei einer Temperatur von 120 °C bis 220 °C und für eine definierte Zeitspanne miteinander laminiert.

2. Verfahren nach Anspruch 1, wobei das Bauteil (2, 3, 6, 7) ein elektronische Bauteil (2, 3, 7) oder eine Volumenhologramm (6) ist.

3. Verfahren nach Anspruch 1 oder 2, wobei das Polycarbonatderivat ein mittleres Molekulargewicht (Gewichtsmittel) von mindestens 10.000, vorzugsweise von 20.000 bis 300.000, aufweist.

4. Verfahren nach einem der Ansprüche 1 bis 3, wobei das Polycarbonatderivat funktionelle Carbonatstruktureinheiten der Formel (I) enthält, 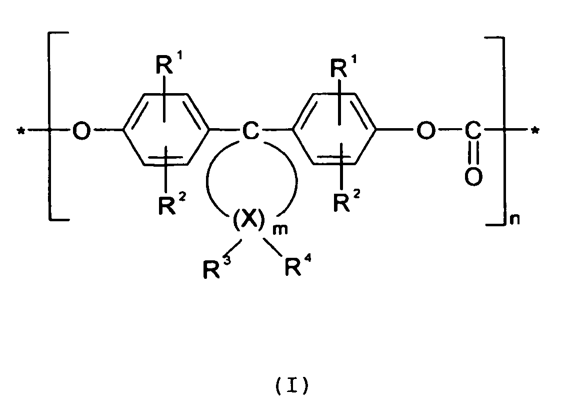 worin
R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
m eine ganze Zahl von 4 bis 7, bevorzugt 4 oder 5,
R³ und R⁴ für jedes X individuell wählbar, unabhängig voneinander Wasserstoff oder C₁-C₆-Alkyl
X Kohlenstoff und
n eine ganze Zahl größer 20 bedeuten,
mit der Massgabe, dass an mindestens einem Atom X, R³ und R⁴ gleichzeitig Alkyl bedeuten.

5. Verfahren nach Anspruch 4, wobei an 1 bis 2 Atomen X, insbesondere nur an einem Atom X, R³ und R⁴ gleichzeitig Alkyl sind und/oder wobei R³ und R⁴ Methyl sind und/oder wobei die X-Atome in alpha-Stellung zu dem Diphenyl-substituierten C-Atom (C1) nicht dialkylsubstituiert sind und/oder wobei die X-Atome in beta-Stellung zu C1 mit Alkyl disubstituiert sind und/oder wobei m = 4 oder 5 ist.

6. Verfahren nach einem der Ansprüche 4 oder 5, wobei das Polycarbonatderivat auf Basis 4,4'-(3,3,5-trimethylcyclohexan-1,1-diyl)diphenol, 4,4'-(3,3-dimethylcyclohexan-1,1-diyl)diphenol, oder 4,4'-(2,4,4-trimethylcyclopentan-1,1-diyl)diphenol ist.

7. Verfahren nach einem der Ansprüche 1 bis 6, wobei das Polycarbonatderivat ein Copolymer enthaltend, insbesondere bestehend aus, Monomereinheiten M1 auf Basis Bisphenol A sowie Monomereinheiten M2 auf Basis des geminal disubstituierten Dihydroxydiphenylcycloalkans, vorzugsweise des 4,4'-(3,3,5-trimethylcyclohexan-1,1-diyl)diphenols, ist, wobei das Molverhältnis M2/M1 vorzugsweise größer als 0,3, insbesondere größer als 0,40, beispielsweise größer als 0,50, ist.

8. Verfahren nach einem der Ansprüche 1 bis 7, wobei die Temperatur in Stufe e) im Bereich von 120 °C bis 220 °C ist.

9. Verfahren nach einem der Ansprüche 1 bis 8, wobei die erste Polycarbonatschicht (1) und die zweite Polycarbonatschicht (5) eine Glastemperatur T_{g} von mehr als 145 °C aufweisen.

10. Verfahren nach einem der Ansprüche 1 bis 9, wobei die Dicke der ersten Polycarbonatschicht (1) und der zweiten Polycarbonatschicht (5), gleich oder verschieden, im Bereich von 10 bis 1000 µm, insbesondere von 20 bis 200 µm, liegt und/oder wobei die Dicke, gemessen in Richtungen orthogonal zu einer Hauptfläche einer Polycarbonatschicht (1, 5), des Bauteils im Bereich 0,1 bis 50 µm, insbesondere 1 bis 30 µm, liegt.

11. Verbund erhältlich nach einem der Ansprüche 1 bis 10.

12. Verbund enthaltend eine erste Polycarbonatschicht (1), eine zweite Polycarbonatschicht (5), ein zwischen der ersten Polycarbonatschicht (1) und der zweiten Polycarbonatschicht (5) angeordnetes Bauteil (2, 3, 6, 7) und eine die erste Polycarbonmatschicht (1) mit der zweiten Polycarbonatschicht (5) verbindenden Zwischenschicht (4) enthaltend ein Polycarbonatderivat auf Basis eines geminal disubstituierten Dihydroxydiphenylcycloalkans, wobei die Polycarbonatschichten (1, 5) und die Zwischenschicht (4) jeweils stoffschlüssig miteinander verbunden sind.

13. Verwendung eines Verfahrens nach einem der Ansprüche 1 bis 10 zur Herstellung eines Sicherheits- und/oder Wertdokuments, wobei gleichzeitig mit, oder vor oder nach der Herstellung des Verbundes die erste Polycarbonatschicht (1) und/oder die zweite Polycarbonatschicht (5) mit zumindest einer weiteren Schicht, beispielsweise einer Druckschicht, direkt oder indirekt verbunden wird.

14. Sicherheits- und/oder Wertdokument erhältlich nach Anspruch 13.

15. Sicherheits- und/oder Wertdokument enthaltend einen Verbund nach Anspruch 11 oder 12 sowie zumindest eine Druckschicht.

## Claims

1. A method for the production of a composite comprising at least one first polymer layer (1) as well as a second polymer layer (5), each being made of a polycarbonate polymer based on bisphenol A, a component (2, 3, 6, 7) being disposed between the polymer layers (1, 5), comprising the following steps:
a) the component is placed on the first polymer layer (1) or inserted into a depression (8) of the first polymer layer (1),
b) on the side, on or in which the component (2, 3, 6, 7) is disposed, the first polymer layer (1) is coated at least in the region of the component (2, 3, 6, 7) with a liquid preparation containing a solvent, or a solvent mixture, and a polycarbonate derivative based on a geminally disubstituted dihydroxy diphenyl cycloalkane,
c) optionally, after step b), a drying step is carried out,
d) after step b) or step c), the second polymer layer (5) is placed onto the first polymer layer (1), covering the component (2, 3, 6, 7),
e) the first polymer layer (1) and the second polymer layer (5) are composited to each other under pressure, at a temperature in the range from 120 °C to 220 °C and for a defined time period.

2. The method according to claim 1, wherein the component (2, 3, 6, 7) is an electronic component (2, 3, 7) or a volume hologram (6).

3. The method according to claim 1 or 2, wherein the polycarbonate derivative has a molecular weight (mean weight) of at least 10,000, preferably 20,000 to 300,000.

4. The method according to one of claims 1 to 3, wherein the polycarbonate derivative contains functional carbonate structural units of Formula (I), 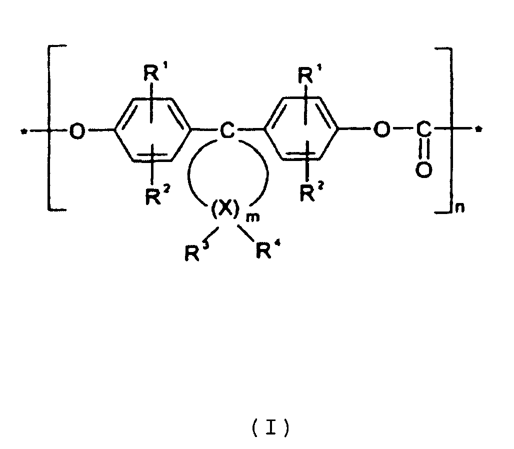 wherein
R¹ and R² independently of one another represent hydrogen, halogen, preferably chlorine or bromine, C₁-C₈ alkyl, C₅-C₆ cycloalkyl, C₆-C₁₀ aryl, preferably phenyl, and C₇-C₁₂ aralkyl, preferably phenyl C₁-C₄ alkyl, in particular benzyl,
m is an integer from 4 to 7, preferably 4 or 5,
R3 and R4 are individually selectable for each X, independently of one another hydrogen or C₁-C₆ alkyl,
X is carbon, and
n is an integer greater than 20,
with the proviso that R³ and R⁴ on at least one X atom are simultaneously alkyl.

5. The method according to claim 4, wherein R³ and R⁴ on 1 to 2 X atoms, in particular only on one X atom, are simultaneously alkyl, and/or wherein R³ and R⁴ are methyl and/or wherein the X atoms in the alpha position to the diphenyl-substituted C atom (C1) are not substituted with dialkyl and/or wherein the X atoms in the beta position to C1 are disubstituted with alkyl, and/or wherein m = 4 or 5.

6. The method according to one of claims 4 or 5, wherein the polycarbonate derivative is based on 4,4'-(3,3,5-trimethylcyclohexan-1,1-diyl)diphenol, 4,4'-(3,3-dimethylcyclohexan-1,1-diyl)diphenol, or 4,4'-(2,4,4-trimethylcyclopentan-1,1-diyl)diphenol.

7. The method according to one of claims 1 to 6, wherein the polycarbonate derivative contains a copolymer, in particular consists of, monomer units M1 based on bisphenol A, as well as monomer units M2 based on the geminally disubstituted dihydroxy diphenyl cycloalkane, preferably of the 4,4'-(3,3,5-trimethyl cyclohexane-1,1-diyl)diphenol, wherein the molar ratio M2/M1 preferably is greater than 0.3, in particular greater than 0.40, for instance greater than 0.50.

8. The method according to one of claims 1 to 7, wherein the temperature in step e) is in the range from 120 °C to 220 °C.

9. The method according to one of claims 1 to 8, wherein the first polycarbonate layer (1) and the second polycarbonate layer (5) have a glass temperature Tg greater than 145 °C.

10. The method according to one of claims 1 to 9, wherein the thickness of the first polycarbonate layer (1) and of the second polycarbonate layer (5) is, identical or different, in the range from 10 to 1,000 µm, in particular from 20 to 200 µm, and/or wherein the thickness, measured in directions orthogonal to a main face of a polycarbonate layer (1, 5), of the component is in the range from 0.1 to 50 µm, in particular 1 to 30 µm.

11. A composite obtainable according to one of claims 1 to 10.

12. A composite comprising a first polycarbonate layer (1), a second polycarbonate layer (5), a component (2, 3, 6, 7) disposed between the first polycarbonate layer (1) and the second polycarbonate layer (5), and an intermediate layer (4) connecting the first polycarbonate layer (1) with the second polycarbonate layer (5) and comprising a polycarbonate derivative based on a geminally disubstituted dihydroxy diphenyl cycloalkane, wherein the polycarbonate layers (1, 5) and the intermediate layer (4) are firmly bonded with one another.

13. The use of a method according to one of claims 1 to 10 for the production of a security and/or value document, wherein simultaneously with or before or after the production of the composite, the first polycarbonate layer (1) and/or the second polycarbonate layer (5) are directly or indirectly connected with at least one additional layer, for instance a printing layer.

14. A security and/or value document obtainable according to claim 13.

15. A security and/or value document comprising a composite according to claim 11 or 12 and at least one printing layer.

## Revendications

1. Procédé de production d'un matériau composite comprenant au moins une première couche polymérique (1) aussi bien qu'une deuxième couche polymérique (5), chacune en un polymère de polycarbonate sur la base de bisphénol A, entre les couches polymériques (1, 5) un composant (2, 3, 6, 7) étant disposé, comprenant les étapes suivantes:
a) le composant est mis en place sur la première couche polymérique (1) ou inséré dans une cavité (8) de la première couche polymérique (1),
b) sur le côté sur ou dans lequel le composant (2, 3, 6, 7) est disposé, la première couche polymérique (1) est enduite au moins dans la région du composant (2, 3, 6, 7) d'une préparation liquide contenant un solvant, ou un mélange de solvants, et un dérivé de polycarbonate sur la base d'un dihydroxy-diphényle-cycloalcane disubstitué de manière géminée,
c) optionnellement, après l'étape b), une étape de séchage a lieu,
d) après l'étape b) ou l'étape c), la deuxième couche polymérique (5) est mise en place sur la première couche polymérique (1), en recouvrant le composant (2, 3, 6, 7),
e) la première couche polymérique (1) et la deuxième couche polymérique (5) sont laminées l'une avec l'autre sous pression à une température comprise entre 120 °C et 220 °C et pendant un temps défini.

2. Procédé selon la revendication 1, dans lequel le composant (2, 3, 6, 7) est un composant électronique (2, 3, 7) ou un hologramme de volume (6).

3. Procédé selon la revendication 1 ou 2, dans lequel le dérivé de polycarbonate a un poids moléculaire (poids moyen) d'au moins 10.000, de préférence 20.000 à 300.000.

4. Procédé selon une des revendications 1 à 3, dans lequel le dérivé de polycarbonate contient des unités structurelles fonctionnelles de carbonate de la formule (I), 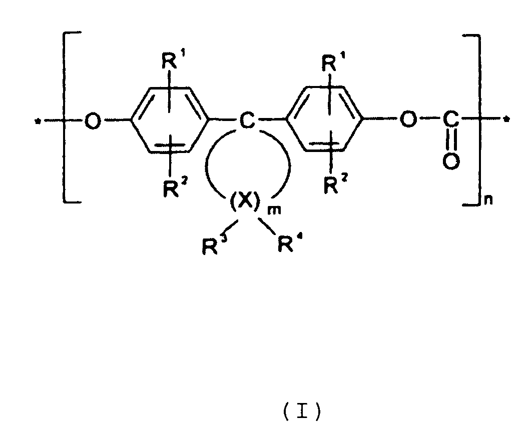 dans laquelle
R¹ et R² représentent indépendamment l'un de l'autre hydrogène, halogène, de préférence chlore ou brome, alkyle en C₁ à C₈, cycloalkyle en C₅ à C₆, aryle en C₆ à C₁₀, de préférence phényle, et aralkyle en C₇ à C₁₂, de préférence phényle-alkyle en C₁ à C₄, en particulier benzyle,
m est un entier compris entre 4 et 7, de préférence 4 ou 5,
R3 et R4 sont individuellement choisissables pour chaque X, indépendamment l'un de l'autre hydrogène ou alkyle en C₁ à C₆,
X est carbone, et
n est un entier supérieur à 20,
pourvu que R³ et R⁴ sur au moins un atome X sont simultanément alkyle.

5. Procédé selon la revendication 4, dans lequel sur 1 à 2 atomes X, en particulier seulement sur un atome X, R³ et R⁴ sont simultanément alkyle, et/ou dans lequel R³ et R⁴ sont méthyle et/ou dans lequel les atomes X dans la position alpha à l'atome C (C1) substitué en diphényle ne sont pas substitués en dialkyle et/ou dans lequel les atomes X dans la position bêta à C1 sont disubstitués en alkyle, et/ou dans lequel m = 4 ou 5.

6. Procédé selon une des revendications 4 ou 5, dans lequel le dérivé de polycarbonate est sur la base de 4,4'-(3,3,5-triméthylecyclohexane-1,1-diyl)diphénol, 4,4'-(3,3-diméthylecyclohexane-1,1-diyl)diphénol, ou 4,4'-(2,4,4-triméthylecyclopentane-1,1-diyl)diphénol.

7. Procédé selon une des revendications 1 à 6, dans lequel le dérivé de polycarbonate est un copolymère contenant, en particulier se composant d'unités monomères M1 sur la base de bisphénol A, aussi bien que d'unités monomères M2 sur la base du dihydroxy-diphényle-cycloalcane disubstitué de manière géminée, de préférence du 4,4'-(3,3,5-triméthylecyclohexane-1,1-diyl) diphénol, la proportion molaire M2/M1 de préférence étant supérieure à 0,3, en particulier supérieure à 0,40, de préférence supérieure à 0,50.

8. Procédé selon une des revendications 1 à 7, dans lequel la température dans l'étape e) est dans la gamme comprise entre 120 °C et 220 °C.

9. Procédé selon une des revendications 1 à 8, dans lequel la première couche de polycarbonate (1) et la deuxième couche de polycarbonate (5) ont une température de transition vitreuse Tg supérieure à 145 °C.

10. Procédé selon une des revendications 1 à 9, dans lequel l'épaisseur de la première couche de polycarbonate (1) et de la deuxième couche de polycarbonate (5) est, identique ou différente, dans la gamme comprise entre 10 et 1000 µm, en particulier dans la gamme comprise entre 20 et 200 µm, et/ou dans lequel l'épaisseur, mesurée dans des directions orthogonales à une face principale d'une couche de polycarbonate (1, 5), du composant est dans la gamme comprise entre 0,1 et 50 µm, en particulier 1 et 30 µm.

11. Matériau composite obtenable selon une des revendications 1 à 10.

12. Matériau composite comprenant une première couche de polycarbonate (1), une deuxième couche de polycarbonate (5), un composant (2, 3, 6, 7) disposé entre la première couche de polycarbonate (1) et la deuxième couche de polycarbonate (5), et une couche intermédiaire (4) liant la première couche de polycarbonate (1) avec la deuxième couche de polycarbonate (5) et comprenant un dérivé de polycarbonate sur la base d'un dihydroxy-diphényle-cycloalcane disubstitué de manière géminée, dans lequel la couche de polycarbonates (1, 5) et la couche intermédiaire (4) sont solidement fixées l'une avec l'autre.

13. Utilisation d'un procédé selon une des revendications 1 à 10 pour produire un document de sécurité et/ou de valeur, dans lequel simultanément avec ou avant ou après la production du matériau composite, la première couche de polycarbonate (1) et/ou la deuxième couche de polycarbonate (5) sont directement ou indirectement liées avec au moins une couche additionnelle, par exemple une couche d'impression.

14. Document de sécurité et/ou de valeur obtenable selon la revendication 13.

15. Document de sécurité et/ou de valeur comprenant un matériau composite selon la revendication 11 ou 12 et au moins une couche d'impression.
